# EUROPEAN PATENT SPECIFICATION

(11) **EP 2 360 816 B1**
(45) Date of publication and mention of the grant of the patent: **12.09.2012**
(21) Application number: 10154590.3
(22) Date of filing: 24.02.2010
(51) Int. Cl.: H02K 1/32, H02K 1/27

(54) **Assembly for mounting magnets on a steel sheet rotor pack**
Anordnung zur Montage von Magneten auf einem laminierten Rotorpaket
Ensemble pour monter des aimants sur un paquet de tôles de rotor

(43) Date of publication of application: 24.08.2011
(73) Proprietor: Indar Electric S.L., 20200 Beasain Guipuzcoa (ES)
(72) Inventor: Rebollo Gomez, Adolfo, 20200, Beasain (ES); Calvo Madariaga, Xabier, 20200, Beasain (ES); Estibariz Aristi, Jose Antonio, 20200, Beasain (ES); Diaz Barrenetxea, Gaizka, 20200, Beasain (ES); Vaquerio Ayastuy, Jon, 20200, Beasain (ES); Churruca Gabilondo, Nestor, 20200, Beasain (ES); Sanchez Castaño, Javier, 20200, Beasain (ES); Avis Plata, Marta, 20200, Beasain (ES); Legorburu Aramburu, Julen, 20200, Beasain (ES)
(74) Representative: Igartua, Ismael

(56) References cited:
- EP-A2- 1 860 755
- WO-A1-2007/025180
- WO-A1-2008/110542
- DE-A1-102007 038 668
- JP-A- 10 336 929
- JP-A- 57 059 462
- JP-A- 2001 025 192
- US-A- 6 081 052

## Description

### OBJECT OF THE INVENTION

The present invention relates to the technical field of electric machines and particularly to the field of electric machines excited by permanent magnets. Specifically, an object of the invention is a novel assembly for mounting magnets on the surface of a steel sheet rotor pack.

### BACKGROUND OF THE INVENTION

A permanent magnet electric machine is a synchronous machine whose rotor magnetic field is created by means of permanent magnets fitted to the rotor pack. Since the rotor pack rotates at high speeds when the machine is running, the fitting of the magnets must be strong enough to withstand the centrifugal forces, as well as the magnetic forces appearing between the magnets themselves. While rotor packs employed in electric machines without permanent magnets are formed by steel sheets joined together by means of pressure, this type of rotor pack is not employed in permanent magnet machines because of the difficulty of making screwed holes in the steel sheets for fitting the magnets. For this reason, rotor packs used in permanent magnet electric machines are usually formed by a single solid piece of steel to which the magnets are more easily fitted.

There are mainly two ways of fitting the magnets to the solid piece of steel: embedded or surface mounted. Embedding the magnets in the rotor pack is usually very complex and expensive, partly because the magnetic forces appearing between the magnets make the embedding operation extremely difficult. On the other hand, while fitting the magnets on the surface of the rotor pack is easier to do, the magnetic and centrifugal forces appearing within the magnets when the machine is in use are often loo strong, This solution being thus limited lo slow machines.

Additionally, generally speaking all pieces forming the rotor must be placed accurately in their location in the rotor pack, since an inaccurate fitting of the pieces may cause the machine to be noisy. Specifically, an inadequate position of the magnets may cause a drop in the performance of the machine, as well as high levels of noise and vibration.

On the other hand, rare earth permanent magnets may suffer demagnetization if overheated, so me consequences being a drop in performance due to an increase in air gap surface losses, a cooling system for the rotor, such as cooling ducts, being thus necessary.

JP 57 059462 A discloses an assembly comprising a rotor core having a plurality of engaging grooves axially along the outer surface of the rotor core. In each groove, a mounting piece mounting a plurality of permanent magnets is inserted.

JP 2001 025192 A discloses a permanent magnet type electric machine comprising a rotor having a plurality of engaging grooves axially along the outer surface of the rotor. A back plate comprising permanent magnets fixed on it is engaged in each groove.

DE 10 2007 038668 A1 discloses a rotor with permanent magnets. The magnets are arranged on a carrier or support, said support being glued to a reflux element of the rotor.

EP 1 860 755 A2 discloses a permanent magnet rotor arrangement including a rotor having a radially outer rim. A circumferential array of magnet carriers is affixed to the outer rim.

JP 10 336929 A discloses a rotor comprising a plurality of seat places arranged on it, fixed using bolts. Magnets are placed on the seat places, clamped between a pressing member and the corresponding seat place.

US 6 081 052 A discloses a rotor body and a plurality of permanent magnets bonded to an outer peripheral surface of the rotor body. Each permanent magnet is bonded onto a dove - tailed pedestal, which is fitted on a corresponding dove - tail groove of the rotor body.

WO 2007/025180 A1 discloses an assembly comprising magnets fixed to a rotor pack. The rotor comprises a plurality of slots on its outer surface and a plurality of gripping bars with a lower portion slipping into a corresponding slot. Each gripping bar overlaps two adjacent magnets with it upper portion, said magnets being held onto the rotor surface.

### SUMMARY OF THE INVENTION

In view of all of the above, a need still exists in the art to develop an assembly for fixing magnets to a steel sheet rotor pack in a permanent magnet electric machine. This objective is achieved with an assembly according to claim 1. The present invention describes an assembly employing a baseplate which is easily manufactured employing the leftovers of the steel sheets previously used to manufacture the stator. In fact, also the rotor pack may be manufactured employing the leftovers of the sheets used to make the stator, this solution thus being more economic, less time-consuming and requiring a lower amount of labour.

A first aspect of the invention discloses an assembly for mounting magnets on a steel sheet rotor pack which comprises a plurality of baseplates made of a magnetic material and fixed to the rotor pack, a plurality of magnets being in turn fitted lo each baseplate. The baseplates may have any shape suitable for covering the outer surface of the rotor pack, although preferably they are curved rectangular sheets which, when assembled, form a cylinder covering the outer surface of the rotor pack.

According to the invention, the baseplates are fixed to the rotor pack by means of inner locking bars housed in axial ducts provided inside said rotor pack. Inner locking bars are elongated metal bars having a shape suitable for fitting inside the axial ducts. The baseplates are thus fitted to the locking bars by fixing means passing through longitudinal channels connecting the axial ducts and the outer surface of the rotor pack. The axial ducts housing the inner locking bars are the axial cooling ducts frequently provided in steel sheet rotor packs. The axial ducts are larger than the cross-section of the inner locking bars, thus allowing air to flow through said axial ducts.

In the present document, the term "fastener" makes reference to any type of elongated part commonly employed for fixing two pieces toghether, such as bolts, screws, studs, spikes, mandrels or the like. There are mainly two ways of fixing the baseplates to the rotor pack using the fixing means:
- According to a preferred embodiment of the invention, the fixing means comprise fasteners screwed to the baseplates and to the inner locking bars.
- According to another preferred embodiment of the invention, the fixing means comprise outer locking bars having a shape which overlaps over the lateral sides of the baseplates and which are fitted to the inner locking bars by means of fasteners screwed to the inner and the outer locking bars. This configuration allows holding the baseplates into place without employing screws or the like for fixing the baseplates to the outer locking bars, but only by means of the complementary overlapping shape of the outer locking bars. Preferably, the locking bars are made of a magnetic material, therefore forming part of the electric circuit of the electric machine.

According to the invention, the magnets are fitted to the baseplate by a bandage wound around the magnets. The bandage, preferably made of glass fiber, may have any number of turns around the rotor pack for ensuring a correct fitting of the magnets.

According to another preferred embodiment of the invention, the inner surface of each baseplate is formed by planes having longitudinal edges for positioning the baseplates tangentially on respective planes and longitudinal edges formed on the outer surface of the rotor pack. The baseplates therefore do not fit into place unless they are correctly positioned on the surface of the rotor pack, this positioning system preventing potential noise and/or vibration problems arising when the machine is running.

Preferably, the rotor pack further comprises radial ducts formed between pairs of sheets, these radial ducts allowing air to flow outwards from the inside of the rotor pack.

According to another preferred embodiment, the rotor pack also comprises pairs of sheets which protrude from the outer surface of the rotor pack, these pairs of protruding sheets being positioned such that they aid in positioning the baseplates axially. The rotor pack may also comprise protruding sheets positioned such that they aid in guiding the bandage over the magnets.

In order to make the handling of the baseplates easier when mounting them to the rotor pack, the baseplates comprise lateral grooves, holes or drills which allow for grasping.

Finally, the invention is further directed to a permanent magnet electric machine comprising an assembly of the type described above.

An important drawback when fitting magnets to a rotor pack according to the prior art is caused by the magnetic forces appearing between the magnets. In short, the magnets are usually firstly magnetized and then fitted to the rotor pack individually. The reason is the enormous amount of energy that would be required to magnetize all the magnets at the same time once they are all fitted to the rotor pack. Therefore, as the number of magnets fitted to the rotor increases, so do the magnetic forces therebetween, and accordingly the more difficult it is to position and fit subsequent magnets.

Conversely, the present invention allows for fixing a small number of demagnetized magnets to a baseplate, this operation being easy due to the lack of magnetic forces. Then, both the magnets and the baseplate are magnetized, and subsequently the baseplate fixed to the rotor pack. These steps are repeated until all the baseplates are fixed to the rotor pack. This process significantly reduces the number of operations required to mount all the magnets to the rotor pack, thus saving labour time and costs. Also, fitting the magnets to the baseplate while still demagnetized is safer than the prior art method of mounting them under the influence of strong magnetic forces.

### BRIEF DESCRIPTION OF THE DRAWINGS

Fig. 1 shows a perspective view of a steel sheet rotor pack according to a preferred embodiment of the present invention.
Fig. 2 shows a perspective view of a baseplate having magnets fitted thereto according to a preferred embodiment of the present invention.
Fig. 3 shows a transversal cross-section view of an embodiment that is not part of the invention.
Fig. 4 shows a transversal cross-section view of a preferred embodiment of the assembly of the invention.
Fig. 5 shows an axial cross-section of yet another preferred embodiment of the invention.

### DESCRIPTION OF PREFERRED EMBODIMENTS

A detailed description of a preferred embodiment of the present invention will be made, making references to the aforementioned figures.

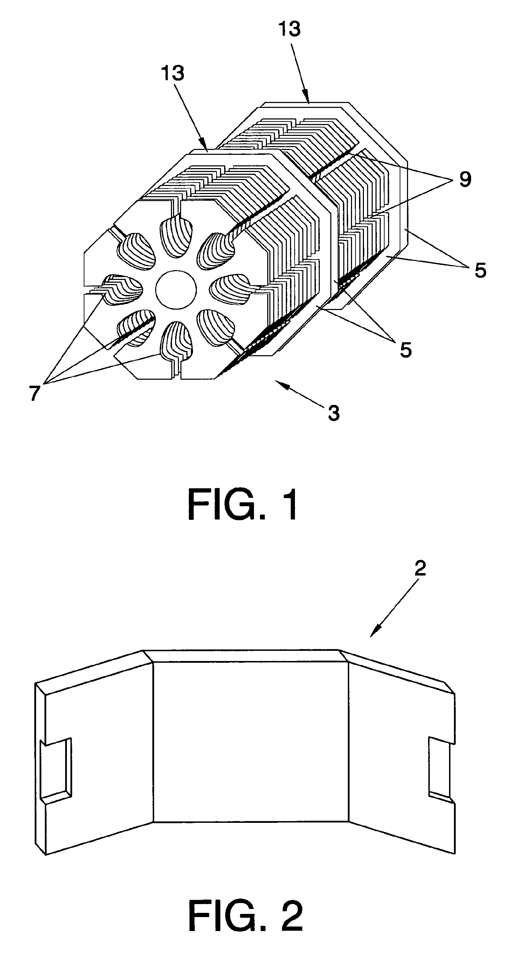

Fig. 1 shows a rotor pack (3) according to an embodiment of the invention. The rotor pack (3) is formed by a plurality of laminated steel sheets fixed to a metallic shaft (12) (not shown in Fig. 1). Additionally, the outer surface of the rotor pack (3) is formed by a number of longitudinal planes having edges for positioning the baseplates (2) tangentially. Also, this rotor pack (3) comprises a number of steel sheets (5) protruding from its outer surface and having radial ducts (13) therebetween which allow for the cooling of the rotor pack (3). Additionally, these protruding steel sheets (5) serve as a guide for positioning the baseplates (2) axially and, if a bandage (11) for fixing magnets (4) is employed, they also serve for guiding the bandage (11) around the magnets (4). The rotor pack (3) of the invention further shows longitudinal channels (9) which allow for fixing baseplates (2) thereto according to the description below.

Fig. 2, shows a perspective view of a baseplate (2) according to the invention. The baseplate (2) is made of a magnetic material, and its inner surface is formed by planes and edges complementary with those of the rotor pack (3) of Fig. 1, such that the baseplates (2) fit on the outer surface of the rotor pack (3) in certain positions. It is evident from these drawings that the baseplates (2) only fit on the external surface of the rotor pack (3) in certain specific positions, thus facilitating the step of mounting the baseplates (2) fitted with magnetized magnets (4). Fig. 2 also shows a couple of lateral grooves provided in the inner surface of the baseplate (2) which make handling easier.

Once laid in position, each baseplate (2) is fixed to respective inner locking bars (6) located inside axial ducts (7) provided within the rotor pack (3).

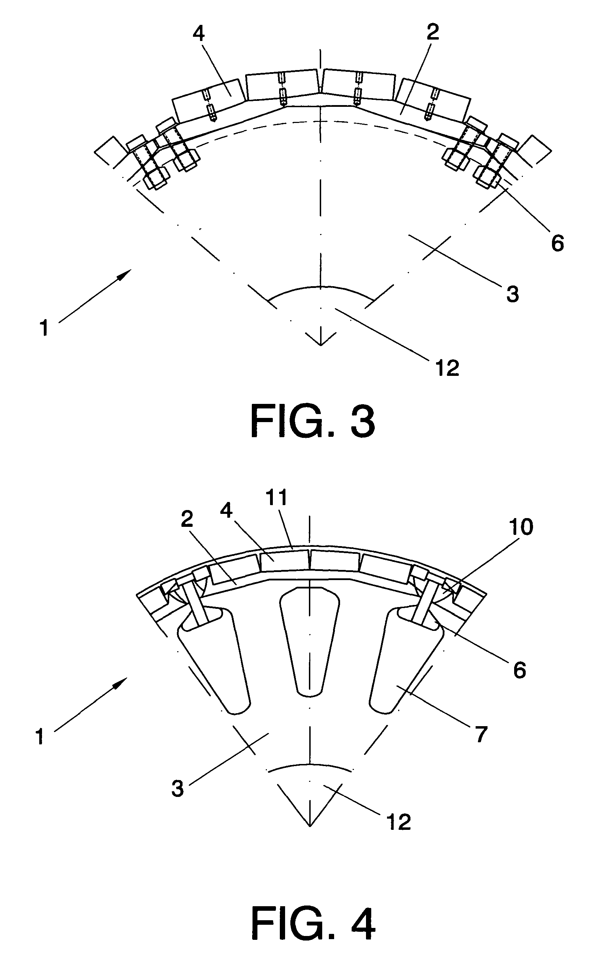

Fig. 4 shows an embodiment of the assembly (1) of the invention where the baseplates (2) are fixed to the rotor pack (3) by means of an outer locking bar (10) having a shape overlapping the lateral sides of the baseplates, a dovetail shape in this example, the shorter side of the inner locking bar (10) being adjacent to the outer surface of the rotor pack (3). Thus, when screwed by means of fasteners to the inner locking bars (6) located in the axial ducts (7), the dovetail shaped outer locking bars (10) hold the baseplates (2) in position. The figure also discloses the magnets (4) being fitted to the baseplate (2) by means of a bandage (11) rolled around them. The axial ducts (7) shown in this figure have a size larger than the cross-section of the inner locking bars (6), thus allowing space for cooling air to flow through.

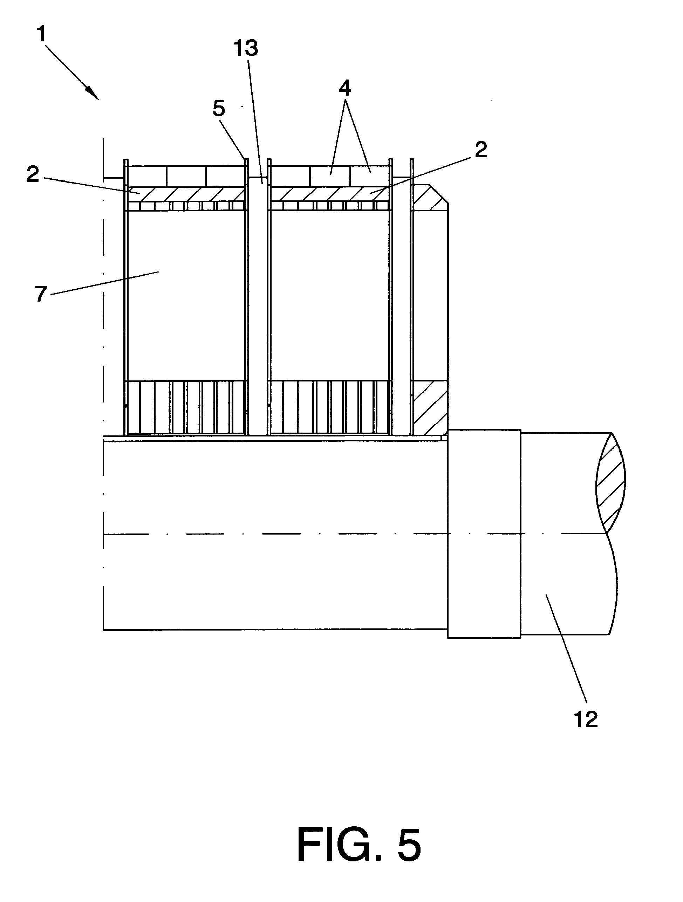

Finally, Fig. 5 shows an axial cross-section of an assembly (1) according to the invention where the radial cooling ducts (13) can be seen. The radial cooling ducts (13) in this figure are formed by two steel sheets (5) separated by a distance which allows air to flow out of the rotor pack (3). The steel sheets (5), as also disclosed earlier in the present document, may also be employed as a guide for positioning the baseplates (2) tangentially on the outer surface of the rotor pack (3).

## Claims

1. An assembly (1) comprising a rotor pack (3), a plurality of baseplates (2) made of a magnetic material and fixed to the rotor pack (3), and a plurality of magnets (4) being in turn fitted to each baseplate (2), **characterizing in that** the rotor pack (3) is a steel sheet rotor pack, the baseplates (2) being fixed to the rotor pack (3) by means of inner locking bars (6) housed in axial ducts (7) provided inside said rotor pack (3) and being fitted to the inner locking bars (6) by fixing means passing through longitudinal channels (9) connecting the axial ducts (7) and the outer surface of the rotor pack (3), the axial ducts (7) being larger than the cross-section of the inner locking bars (6) such that air can flow through them, and the magnets (4) being fitted to the baseplate (2) by a bandage (11) wound around the magnets (4).

2. Assembly (1) according to claim 1, wherein the fixing means comprise fasteners screwed to the baseplates (2) and to the inner locking bars (6).

3. Assembly (1) according to claim 1, wherein the fixing means comprise outer locking bars (10) having a shape which overlaps over the lateral sides of the baseplates (2) and which are fitted to the inner locking bars (6) by means of fasteners screwed to the outer locking bars (10) and to the inner locking bars (6).

4. Assembly (1) according to claim 3, wherein the outer locking bars (10) are dovetail shaped.

5. Assembly (1) according to any of claims 1 to 4, wherein the locking bars (6, 10) are made a magnetic material.

6. Assembly (1) according to any of the previous claims, wherein the inner surface of each baseplate (2) is formed by planes having longitudinal edges for positioning the baseplates (2) tangentially on respective planes and longitudinal edges formed on the outer surface of the rotor pack (3).

7. Assembly (1) according to any of the previous claims, wherein the rotor pack (3) further comprises radial ducts formed between pairs of sheets.

8. Assembly (1) according to any of the previous claims, wherein the rotor pack (3) further comprises sheets (5) protruding from the outer surface of the rotor pack (3) which serve as a guide for positioning the baseplates (2) axially.

9. Assembly (1) according to any of the previous claims, wherein the rotor pack (3) further comprises sheets (5) protruding from the outer surface of the rotor pack (3) which serve as a guide for the bandage (11).

10. Assembly (1) according to any of the previous claims, wherein each baseplate (2) comprises lateral grooves, holes or drills for easing handling operations.

11. Permanent magnet electric machine comprising an assembly (1) according to any of claims 1 to 10.

## Patentansprüche

1. Baugruppe (1), umfassend einen Rotorblock (3), eine Vielzahl von Grundplatten (2), die aus einem magnetischen Material hergestellt sind und an dem Rotorblock (3) befestigt sind, und eine Vielzahl von Magneten (4), die wiederum an jeder Grundplatte (2) angebracht sind, **dadurch gekennzeichnet, dass** der Rotorblock (3) ein Rotorblock aus Stahlblech ist, wobei die Grundplatten (2) an dem Rotorblock (3) anhand von Innenriegeln (6) befestigt sind, die in axialen Durchführungen (7) aufgenommen sind, die im Innern des Rotorblocks (3) bereitgestellt werden und an den Innenriegeln (6) über Befestigungsmittel, die durch Längskanäle (9) gehen, welche die axialen Durchführungen (7) und die äußere Oberfläche des Rotorblocks (3) verbinden, angebracht sind, wobei die axialen Durchführungen (7) größer als der Querschnitt der Innenriegel (6) sind, so dass Luft dadurch hindurch fließen kann, und wobei die Magnete (4) an der Grundplatte (2) über ein Band (11), das um die Magnete (4) gewickelt ist, angebracht sind.

2. Baugruppe (1) nach Anspruch 1, wobei die Befestigungsmittel Befestigungselemente umfassen, die an den Grundplatten (2) und den Innenriegeln (6) angeschraubt sind.

3. Baugruppe (1) nach Anspruch 1, wobei die Befestigungsmittel Außenriegel (10) umfassen, die eine Form aufweisen, welche die lateralen Seiten der Grundplatten (2) überlagern und die an den Innenriegeln (6) anhand von Befestigungselementen angebracht sind, die an den Außenriegeln (10) und den Innenriegeln (6) angeschraubt sind.

4. Baugruppe (1) nach Anspruch 3, wobei die Außenriegel (10) schwalbenschwanzförmig sind.

5. Baugruppe (1) nach einem der Ansprüche 1 bis 4, wobei die Riegel (6, 10) aus einem magnetischen Material hergestellt sind.

6. Baugruppe (1) nach einem der vorhergehenden Ansprüche, wobei die innere Oberfläche jeder Grundplatte (2) durch Ebenen gebildet wird, die Längsränder, um die Grundplatten (2) tangential auf jeweiligen Ebenen anzuordnen, und Längsränder, die auf der äußeren Oberfläche des Rotorblocks (3) gebildet sind, aufweisen.

7. Baugruppe (1) nach einem der vorhergehenden Ansprüche, wobei der Rotorblock (3) ferner radiale Durchgänge umfasst, die zwischen Blechpaaren gebildet sind.

8. Baugruppe (1) nach einem der vorhergehenden Ansprüche, wobei der Rotorblock (3) ferner Bleche (5) umfasst, die von der äußeren Oberfläche des Rotorblocks (3) vorstehen und als Führung dienen, um die Grundplatten (2) axial zu positionieren.

9. Baugruppe (1) nach einem der vorhergehenden Ansprüche, wobei der Rotorblock (3) ferner Bleche (5) umfasst, die von der äußeren Oberfläche des Rotorblocks (3) vorstehen und als Führung für das Band (11) dienen.

10. Baugruppe (1) nach einem der vorhergehenden Ansprüche, wobei jede Grundplatte (2) seitliche Nuten, Löcher oder Bohrungen umfasst, um Handhabungsvorgänge zu erleichtern.

11. Elektrische Dauermagnetmaschine, umfassend eine Baugruppe (1) nach einem der Ansprüche 1 bis 10.

## Revendications

1. Ensemble (1), comprenant un bloc rotor (3), une pluralité de plaques de base (2) réalisées dans un matériau magnétique et fixées au bloc rotor (3), et une pluralité d'aimants (4) à leur tour montés sur chaque plaque de base (2), **caractérisé en ce que** le bloc rotor (3) est un bloc rotor en tôle d'acier, les plaques de base (2) étant fixées au bloc rotor (3) au moyen de verrous de blocage intérieurs (6) logés dans des passages axiaux (7) prévus à l'intérieur dudit bloc rotor (3) et montés sur les verrous de blocage intérieurs (6) par des moyens de fixation passant par des canaux longitudinaux (9) reliant les passages axiaux (7) et la surface extérieure du bloc rotor (3), les passages axiaux (7) étant plus grands que la section transversale des verrous de blocage intérieurs (6) de sorte que l'air peut circuler à travers ceux-ci, et les aimants (4) étant montés sur la plaque de base (2) par une bande (11) enroulée autour des aimants (4).

2. Ensemble (1) selon la revendication 1, dans lequel les moyens de fixation comprennent des éléments de fixation vissés sur les plaques de base (2) et les verrous de blocage intérieurs (6).

3. Ensemble (1) selon la revendication 1, dans lequel les moyens de fixation comprennent des verrous de blocage extérieurs (10) ayant une forme qui chevauche les faces latérales des plaques de base (2) et qui sont montés sur les verrous de blocage intérieurs (6) au moyen d'éléments de fixation vissés sur les verrous de blocage extérieurs (10) et les verrous de blocage intérieurs (6).

4. Ensemble (1) selon la revendication 3, dans lequel les verrous de blocage extérieurs (10) sont en forme de queue d'aronde.

5. Ensemble (1) selon l'une quelconque des revendications 1 à 4, dans lequel les verrous de blocage (6, 10) sont réalisés dans un matériau magnétique.

6. Ensemble (1) selon l'une quelconque des revendications précédentes, dans lequel la surface intérieure de chaque plaque de base (2) est formée par des plans ayant des bords longitudinaux pour positionner les plaques de base (2) de manière tangentielle sur des plans respectifs et des bords longitudinaux formés sur la surface extérieure du bloc rotor (3).

7. Ensemble (1) selon l'une quelconque des revendications précédentes, dans lequel le bloc rotor (3) comprend en outre des passages radiaux formés entre des paires de tôles.

8. Ensemble (1) selon l'une quelconque des revendications précédentes, dans lequel le bloc rotor (3) comprend en outre des tôles (5) faisant saillie à partir de la surface extérieure du bloc rotor (3) qui servent de guide pour positionner les plaques de base (2) axialement.

9. Ensemble (1) selon l'une quelconque des revendications précédentes, dans lequel le bloc rotor (3) comprend en outre des tôles (5) faisant saillie de la surface extérieure du bloc rotor (3) qui servent de guide à la bande (11).

10. Ensemble (1) selon l'une quelconque des revendications précédentes, dans lequel chaque plaque de base (2) comprend des rainures latérales, des trous ou des perçages pour faciliter les opérations de manutention.

11. Machine électrique à aimant permanent comprenant un ensemble (1) selon l'une quelconque des revendications 1 à 10.
